# EUROPEAN PATENT APPLICATION

(11) **EP 4 756 412 A1**
(43) Date of publication of application: **10.06.2026**
(21) Application number: 24868677.6
(22) Date of filing: 19.09.2024
(51) Int. Cl.: G01N 21/88, G01N 21/95, H01M 50/531, H01M 4/04

(54) **APPARATUS AND METHOD FOR INSPECTING ELECTRODE TAB**

(30) Priority: 19.09.2023 KR 20230125111
(71) Applicant: LG Energy Solution, Ltd., Seoul 07335 (KR)
(72) Inventor: LEE, Jin Woo, Daejeon 34122 (KR)
(74) Representative: Goddar, Heinz J.
(86) International application number: PCT/KR2024/014113
(87) International publication number: WO 2025/063700

(57) **Abstract**

An electrode tab inspection apparatus according to an embodiment of the present disclosure may inspect an electrode tab notched at a side of an electrode sheet in a width direction. The electrode tab inspection apparatus may include a detection unit configured to detect a laser beam that is incident thereon; a laser generation unit configured to emit the laser beam toward the detection unit; and a controller configured to determine if the electrode tab is defective based on a detection result of the detection unit when the electrode tab passes a location at which the electrode tab blocks the laser beam incident on the detection unit.

## Description

### TECHNICAL FIELD

### CROSS-REFERENCE TO RELATED APPLICATIONS

The present application claims priority to Korean Patent Application No. 10-2023-0125111 filed on September 19, 2023 and Korean Patent Application No. 10-2024-0126725 filed on September 19, 2024 in the Republic of Korea, the disclosures of which are incorporated herein by reference.

### TECHNICAL FIELD

The present disclosure relates to an apparatus and method for inspecting an electrode tab formed in an electrode sheet by notching.

### BACKGROUND ART

In general, the types of secondary batteries include nickel cadmium batteries, nickel hydrogen batteries, lithium secondary batteries and lithium-ion polymer batteries. Secondary batteries are used in not only small products such as digital cameras, P-DVD, MP3P, mobile phones, PDA, Portable Game Device, Power Tool and E-bike, but also large products requiring high output such as electric vehicles or hybrid electric vehicles and energy storage systems that store surplus energy or new renewable energy and energy storage systems for backup.

To manufacture an electrode assembly, an electrode and a separator are manufactured and stacked. The electrode may be manufactured by applying a slurry-type electrode active material to a foil-type current collector.

Specifically, the positive electrode (cathode) may be manufactured by applying the positive electrode active material slurry to the positive current collector, and the negative electrode (anode) may be manufactured by applying the negative electrode active material slurry to the negative current collector. Additionally, the positive electrode and the negative electrode are stacked with a separator interposed between them to form unit cells, and the unit cells are stacked to form the electrode assembly. Additionally, the electrode assembly is accommodated in a specific case and an electrolyte solution is injected into the case to manufacture a secondary battery.

Meanwhile, the process of manufacturing the electrode includes an active material mixing process, an electrode coating process, a rolling process, a notching process and a cutting process. Among them, the notching process is a process of forming an electrode tab by notching an uncoated portion not coated with the electrode active material at one side of the electrode current collector. Additionally, the cutting process is a process of cutting the electrode sheet having the notched electrode tab into a predetermined length to form a unit electrode.

However, in the process of notching the electrode tab, due to quality degradation of the electrode current collector, defects of the electrode tab may occur, for example, tearing or chipping, and such defects may be referred to as tab torn.

Conventionally, in the process of laminating the unit electrode and the separator sheet, tab torn inspection was performed using a vision camera. However, this inspection method has low reliability, and especially, when only the middle part of the electrode tab is torn, it was difficult to detect the defect.

### SUMMARY

### TECHNICAL PROBLEM

The present disclosure is directed to providing an electrode tab inspection apparatus and method for inspecting a torn or defective electrode tab with reliability.

### TECHNICAL SOLUTION

An electrode tab inspection apparatus according to an embodiment of the present disclosure may inspect an electrode tab notched at a side of an electrode sheet in a width direction. The electrode tab inspection apparatus may include a detection unit configured to detect a laser beam that is incident thereon; a laser generation unit configured to emit the laser beam toward the detection unit; and a controller configured to determine if the electrode tab is defective based on a detection result of the detection unit when the electrode tab passes a location at which the electrode tab blocks the laser beam incident on the detection unit.

The controller may determine that the electrode tab is defective in response to the laser beam being detected by the detection unit when the electrode tab passes the location at which the electrode tab blocks the laser beam.

The laser generation unit and the detection unit may be arranged facing each other such that a path along which the electrode tab passes is interposed between the laser generation unit and the detection unit. The controller may determine if the electrode tab is defective based on the detection result of the detection unit when the electrode tab passes between the laser generation unit and the detection unit.

The laser generation unit may be configured such that a cross-sectional shape of the laser beam has a shape corresponding to the electrode tab.

The laser generation unit may be configured to cause the laser beam to be vertically incident on a surface of the electrode tab when the electrode tab passes the location at which the electrode tab blocks the laser beam.

The laser generation unit may be configured to emit the laser beam toward the detection unit when the electrode tab passes the location at which the electrode tab blocks the laser beam.

The electrode tab inspection apparatus may further include a marking unit configured to mark to identify the electrode tab as determined defective.

The marking unit may be configured to mark a part of the electrode sheet corresponding to the electrode tab determined defective.

The laser generation unit may be configured such that a projection area of the laser beam onto the electrode tab is 50% to 99% of an area of the electrode tab.

An electrode tab inspection method according to an embodiment of the present disclosure may inspect an electrode tab notched at a side of an electrode sheet in a width direction. The electrode tab inspection method may include the steps of emitting, by a laser generation unit, a laser beam toward a detection unit when the electrode tab passes a location at which the electrode tab blocks the laser beam incident into the detection unit; and determining if the electrode tab is defective based on a detection result of the detection unit.

The step of determining if the electrode tab is defective may include determining that the electrode tab is defective in response to the laser beam being detected by the detection unit.

The electrode tab inspection method may further include the step of marking to identify the electrode tab as determined defective.

The step of marking may include marking a part of the electrode sheet corresponding to the electrode tab determined defective.

In the step of emitting the laser beam, a projection area of the laser beam onto the electrode tab may be 50% to 99% of an area of the electrode tab.

### ADVANTAGEOUS EFFECTS

According to an exemplary embodiment of the present disclosure, compared with the conventional electrode tab inspection using a vision device such as a camera, it may be possible to detect defects of the electrode tab with high reliability when microcracks occur due to tears of the middle part of the electrode tab.

Additionally, it may be possible to precisely detect the location of the tear in the electrode tab and the crack size.

Additionally, in the subsequent process, it may be possible to avoid using a unit electrode including the defective electrode tab to manufacture a battery cell and increase the quality of the battery cell.

Besides, the effects of the present disclosure may include effects that can be easily predicted by those skilled in the art from the exemplary embodiments of the present disclosure.

### BRIEF DESCRIPTION OF THE DRAWINGS

The accompanying drawings illustrate the exemplary embodiments of the present disclosure and together with the following detailed description, serve to provide a better understanding of the technical aspect of the present disclosure, and thus the present disclosure should not be construed as being limited to the drawings.
FIG. 1 is a schematic diagram of an electrode tab inspection apparatus according to an embodiment of the present disclosure.
FIG. 2 is a control block diagram of an electrode tab inspection apparatus according to an embodiment of the present disclosure.
FIG. 3A is a diagram showing an electrode tab torn in an outer part when viewed from top, and FIG. 3B is a side view showing defect determination of the electrode tab shown in FIG. 3A.
FIG. 4A is a diagram showing an electrode tab torn in a middle part when viewed from top, and FIG. 4B is a side view showing defect determination of the electrode tab shown in FIG. 4A.
FIG. 5 is a flowchart of an electrode tab inspection method according to another embodiment of the present disclosure.

### DETAILED DESCRIPTION

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

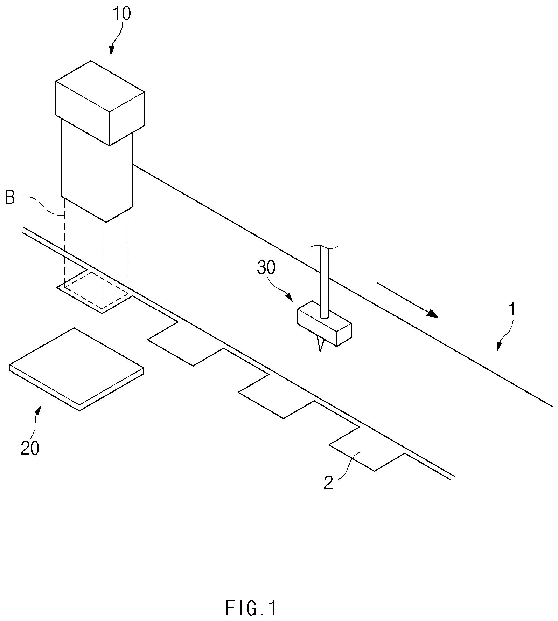

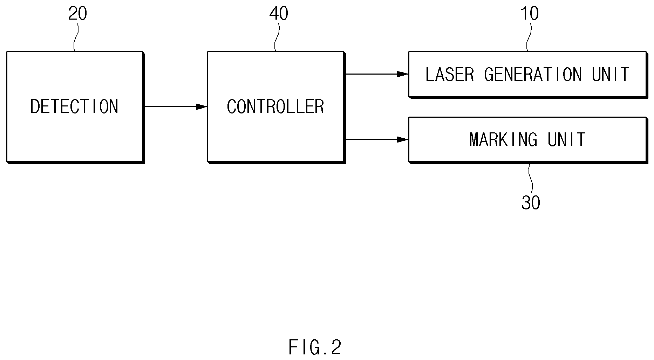

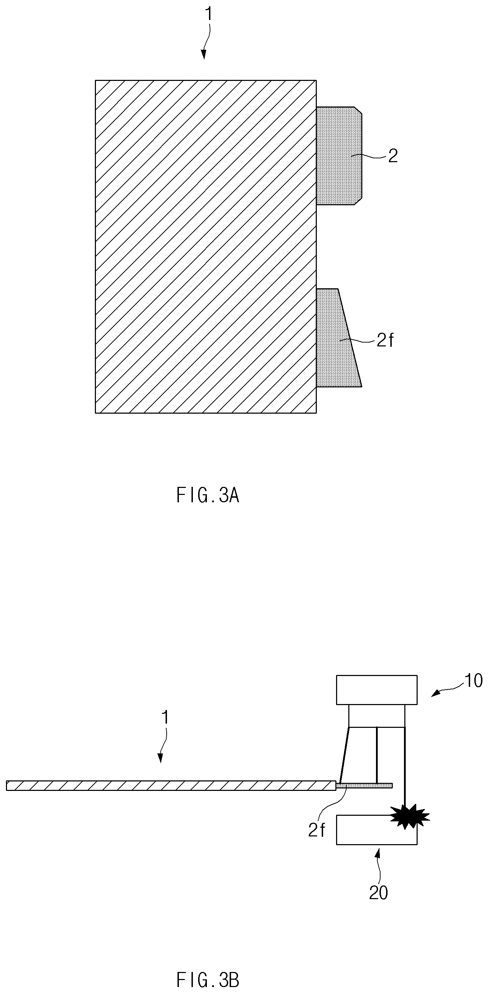

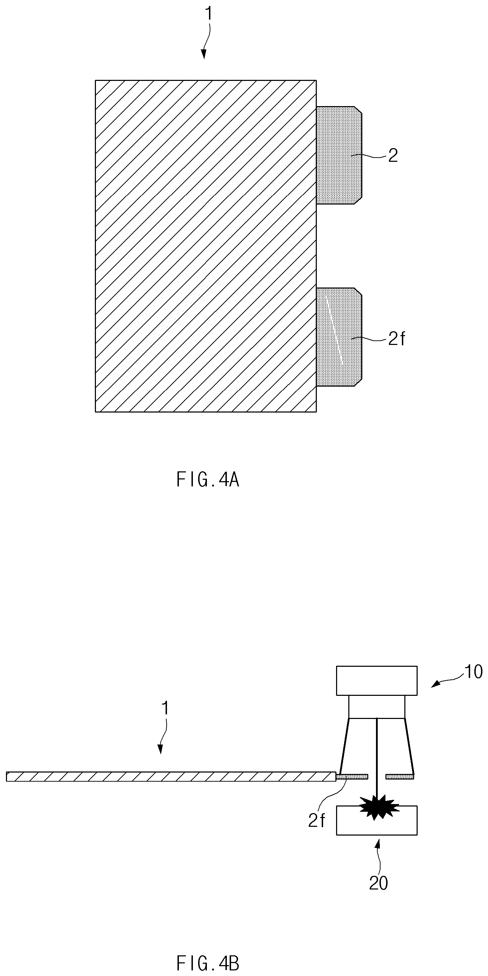

FIG. 1 is a schematic diagram of an electrode tab inspection apparatus according to an embodiment of the present disclosure, FIG. 2 is a control block diagram of the electrode tab inspection apparatus according to an embodiment of the present disclosure, FIG. 3A is a diagram showing an electrode tab torn in an outer part when viewed from top, FIG. 3B is a side view showing defect determination of the electrode tab shown in FIG. 3A, FIG. 4A is a diagram showing the electrode tab torn in a middle part when viewed from top, and FIG. 4B is a side view showing defect determination of the electrode tab shown in FIG. 4A.

The electrode tab inspection apparatus (hereinafter, 'inspection apparatus') according to an embodiment of the present disclosure may inspect an electrode tab 2 notched at one side of an electrode sheet 1 in the width direction. More specifically, the electrode sheet 1 may include a metal foil-type current collector and an electrode active material layer coated on the current collector. The width of the electrode active material layer may be smaller than the width of the current collector. Accordingly, a part of the current collector in the width direction may form an uncoated portion not coated with the electrode active material layer. The electrode tab 2 may include a plurality of electrode tabs formed by notching the uncoated portion of the electrode sheet 1 at a preset interval. The electrode sheet 1 may move in the length direction. The inspection apparatus may be configured to inspect the electrode tab 2 of the electrode sheet 1 in motion.

More specifically, the inspection apparatus may include a laser generation unit 10 configured to emit a laser beam B, a detection unit 20 configured to detect the laser beam B emitted from the laser generation unit 10, and a controller 40 configured to determine if the electrode tab 2 is defective based on the detection result of the detection unit 20.

The laser generation unit 10 may emit the laser beam B toward the detection unit 20. More specifically, the laser generation unit 10 and the detection unit 20 may be arranged facing each other such that a path along which the electrode tab 2 passes is interposed between them. However, the present disclosure is not limited thereto, and the laser beam B emitted from the laser generation unit 10 may change the path by an optical component such as a mirror and enter the detection unit 20. The following description is made, taking the laser generation unit 10 and the detection unit 20 facing each other as an example.

The detection unit 20 may include a detection plate that faces the laser generation unit 10 and is disposed parallel to the electrode sheet 1.

The plurality of electrode tabs 2 may pass between the laser generation unit 10 and the detection unit 20 in a sequential order. For example, the laser generation unit 10 may be located above the path along which the electrode tab 2 passes, and the detection unit 20 may be located below the path.

When the electrode tab 2 passes a location at which the electrode tab 2 blocks the laser beam B, the laser beam B may not be detected by the detection unit 20. This is because the laser beam B emitted from the laser generation unit 10 is not incident into the detection unit 20 when it is blocked by the electrode tab 2. The time when the electrode tab 2 passes the location at which the electrode tab 2 blocks the laser beam B may represent the time when the electrode tab 2 passes between the laser generation unit 10 and the detection unit 20.

The controller 40 may include at least one processor. The controller 40 may be electrically connected to the detection unit 20. The controller 40 may determine if the electrode tab 2 is defective based on the detection result of the detection unit 20 when the electrode tab 2 passes the location at which the electrode tab 2 blocks the laser beam B. That is, the controller 40 may determine if the electrode tab 2 is defective based on the detection result of the detection unit 20 when the electrode tab 2 passes between the laser generation unit 10 and the detection unit 20.

More specifically, in the case where the laser beam B is detected by the detection unit 20 when the electrode tab 2 passes the location at which the electrode tab 2 blocks the laser beam B, the controller 40 may determine that the electrode tab 2 is defective.

When the normal electrode tab 2 passes between the laser generation unit 10 and the detection unit 20, the electrode tab 2 may block the laser beam B. Accordingly, the laser beam B is not detected by the detection unit 20, and the controller 40 may determine that the electrode tab 2 is in normal condition.

In contrast, referring to FIGS. 3A and 3B, when the electrode tab 2f torn in the outer part passes between the laser generation unit 10 and the detection unit 20, the laser beam B is not completely blocked by the torn part of the electrode tab 2f. That is, some of the laser beam B may pass through the torn outer part of the electrode tab 2f and enter the detection unit 20. Accordingly, the laser beam B may be detected by the detection unit 20, and the controller 40 may determine that the electrode tab 2 is defective.

Referring to FIGS. 4A and 4B, when the electrode tab 2f torn in the middle part passes between the laser generation unit 10 and the detection unit 20, the laser beam B is not completely blocked by the torn part of the electrode tab 2f. That is, some of the laser beam B may pass through the torn middle part of the electrode tab 2f and enter the detection unit 20. Accordingly, the laser beam B may be detected by the detection unit 20, and the controller 40 may determine that the electrode tab 2 is defective.

In particular, when microcracks occur due to the tear of the middle part of the electrode tab 2f, a vision camera has a problem with low detection reliability, but the inspection apparatus according to the present disclosure may detect the defect of the electrode tab 2f with high reliability. Additionally, the inspection apparatus according to the present disclosure may precisely detect the location of the tear in the electrode tab 2f and the crack size.

Meanwhile, the laser generation unit 10 may be configured to cause the laser beam B to be vertically incident onto a surface (for example, an upper surface) of the electrode tab 2 when the electrode tab 2 passes the location at which the electrode tab 2 blocks the laser beam B.

The beam cross section of the laser beam B emitted from the laser generation unit 10 may have the shape corresponding to the electrode tab 2. For example, the electrode tab 2 may have an approximately rectangular shape, and the beam cross section of the laser beam B may also have a rectangular shape. Accordingly, when any part of the electrode tab 2 is torn, some of the laser beam B may pass through the torn part.

Additionally, the beam cross section of the laser beam B may be equal to or slightly smaller than the size of the electrode tab 2. That is, the projection area of the laser beam B onto the normal electrode tab 2 may be equal to or slightly smaller than the area of the electrode tab 2. More specifically, the laser generation unit 10 may be configured such that the projection area of the laser beam B onto the electrode tab 2 is 50% to 99% of the area of the electrode tab 2, preferably 70% to 99%.

Accordingly, the normal electrode tab 2 may completely block the laser beam B, and the defective electrode tab 2 may allow some of the laser beam B to pass through.

However, the present disclosure is not limited thereto, and the beam cross section of the laser beam B may be larger than the electrode tab 2. In this case, the controller 40 may determine if the electrode tab 2 is defective on the basis of the area of the laser beam incident into the detection unit 20 when the electrode tab 2 blocks the laser beam B. More specifically, in the case where the laser beam B is not detected at a preset area of the detection unit 20 when the electrode tab 2 blocks the laser beam B, the controller 40 may determine that the electrode tab 2 is in normal condition. In contrast, in the case where the laser beam B is detected at the preset area of the detection unit 20 when the electrode tab 2 blocks the laser beam B, the controller 40 may determine that the electrode tab 2 is defective.

The laser generation unit 10 may be configured to emit the laser beam B toward the detection unit 20 when the electrode tab 2 passes the location at which the electrode tab 2 blocks the laser beam B. This may include not only the laser generation unit 10 turned on and off in a predetermined cycle, but also the laser generation unit 10 kept in on state. The controller 40 may be electrically connected to the laser generation unit 10, and may control the laser generation unit 10.

Meanwhile, the inspection apparatus may further include a marking unit 30 to mark to identify the electrode tab 2 as determined defective. The controller 40 may be electrically connected to the marking unit 30, and may control the marking unit 30.

The marking unit 30 may be configured to put a mark on a part of the electrode sheet 1 corresponding to the electrode tab 2 determined defective. Accordingly, in the subsequent process, a vision device such as a camera may identify the electrode tab 2 determined defective in a straightforward manner.

More specifically, the marking unit 30 may put a mark on an overlapping location with the electrode tab 2 determined defective in the width direction of the electrode sheet 1. Because the electrode sheet 1 is kept tight by tension while in motion, the marking unit 30 may easily perform the marking process on the electrode sheet 1. However, the present disclosure is not limited thereto, and the marking unit 30 may be configured to mark the electrode tab 2 determined defective.

The marking is not limited to a particular type. As an example, the marking unit 30 may attach a tag such as a tape to the electrode sheet 1. As another example, the marking unit 30 may mark the electrode sheet 1 with an ink.

In the subsequent process, the electrode sheet 1 may be cut into unit electrodes by a cutter (not shown), and each unit electrode may have the electrode tab 2. Additionally, the unit electrode may be stacked between two separator sheets to manufacture a battery cell (unit cell). However, because the marked electrode tab 2 of the unit electrode is defective, it is not stacked between two separator sheets and instead it may be removed and discarded. Accordingly, it may be possible to avoid using the unit electrode including the defective electrode tab 2 to manufacture the battery cell, and increase quality of the battery cell.

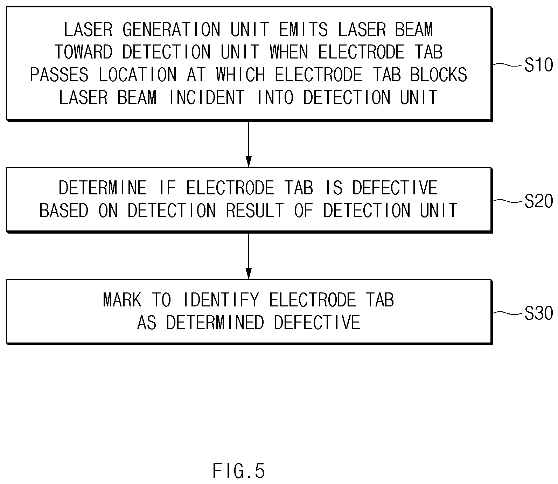

FIG. 5 is a flowchart of an electrode tab inspection method according to another embodiment of the present disclosure.

Hereinafter, the inspection method that may be performed by the above-described inspection apparatus will be described as another embodiment of the present disclosure.

The electrode tab inspection method (hereinafter, 'inspection method') according to another embodiment of the present disclosure may include the step S10 of emitting, by the laser generation unit 10, the laser beam B toward the detection unit 20 when the electrode tab 2 passes the location at which the electrode tab 2 blocks the laser beam B incident into the detection unit 20, and the step S20 of determining if the electrode tab 2 is defective based on the detection result of the detection unit 20.

In the step S10 of emitting the laser beam B, the laser beam B emitted from the laser generation unit 10 may not be incident into the detection unit 20 when it is blocked by the normal electrode tab 2. However, when a part of the electrode tab 2 is chipped or cracked, some of the laser beam B may be incident into the detection unit 20.

That is, when the electrode tab 2 is defective, some of the laser beam B may be incident into the detection unit 20. Accordingly, in the step S20 of determining if the electrode tab 2 is defective, when the laser beam B is detected by the detection unit 20, the electrode tab 2 may be determined defective.

To increase the accuracy of determination, in the step S10 of emitting the laser beam B, the projection area of the laser beam B onto the electrode tab 2 may be 50% to 99% of the area of the electrode tab 2, preferably 70% to 99%.

However, the present disclosure is not limited thereto, and when the cross section of the laser beam B is sufficiently large, even in normal condition of the electrode tab 2, some of the laser beam B may be incident into the detection unit 20 beyond the perimeter of the electrode tab 2. In this case, determination as to if the electrode tab 2 is defective may be made on the basis of the area of the laser beam incident into the detection unit 20 when the electrode tab 2 blocks the laser beam B. More specifically, in the case where the laser beam B is not detected at the preset area of the detection unit 20 when the electrode tab 2 blocks the laser beam B, the electrode tab 2 may be determined normal. In contrast, in the case where the laser beam B is detected at the preset area of the detection unit 20 when the electrode tab 2 blocks the laser beam B, the electrode tab 2 may be determined defective.

The inspection method may further include the step S30 of marking to identify the electrode tab 2 as determined defective. In the marking step, a mark may be put on a part of the electrode sheet 1 corresponding to the electrode tab 2 determined defective.

Accordingly, in the subsequent process, the vision device such as the camera may easily identify the defective electrode tab 2, thereby avoiding using a unit electrode including the defective electrode tab 2 to manufacture a battery cell.

The foregoing description has been made to describe the technical aspect of the present disclosure by way of example, and persons having ordinary skill in the technical field pertaining to the present disclosure would have made a variety of modifications and changes without departing from the essential features of the present disclosure.

Therefore, the disclosed embodiments are provided to describe the technical aspect of the present disclosure and not intended to be limiting, and the technical scope of the present disclosure is not limited by these embodiments.

The scope of protection of the present disclosure should be interpreted by the appended claims, and it should be interpreted that all the technical spirit within the equivalent scope is included in the scope of protection of the present disclosure.

### [List of Reference Numerals]

| | | | |
|---|---|---|---|
| 1: | Electrode sheet | 2: | Electrode tab |
| 10: | Laser generation unit | 20: | Detection unit |
| 30: | Marking unit | 40: | Controller |

## Claims

1. An electrode tab inspection apparatus for inspecting an electrode tab notched at a side of an electrode sheet in a width direction, the electrode tab inspection apparatus comprising:
a detection unit configured to detect a laser beam that is incident thereon;
a laser generation unit configured to emit the laser beam toward the detection unit; and
a controller configured to determine if the electrode tab is defective based on a detection result of the detection unit when the electrode tab passes a location at which the electrode tab blocks the laser beam incident on the detection unit.

2. The electrode tab inspection apparatus according to claim 1,
wherein the controller determines that the electrode tab is defective in response to the laser beam being detected by the detection unit when the electrode tab passes the location at which the electrode tab blocks the laser beam.

3. The electrode tab inspection apparatus according to claim 1,
wherein the laser generation unit and the detection unit are arranged facing each other such that a path along which the electrode tab passes is interposed between the laser generation unit and the detection unit, and
wherein the controller determines if the electrode tab is defective based on the detection result of the detection unit when the electrode tab passes between the laser generation unit and the detection unit.

4. The electrode tab inspection apparatus according to claim 1,
wherein the laser generation unit is configured such that a cross-sectional shape of the laser beam has a shape corresponding to the electrode tab.

5. The electrode tab inspection apparatus according to claim 1,
wherein the laser generation unit is configured to cause the laser beam to be vertically incident on a surface of the electrode tab when the electrode tab passes the location at which the electrode tab blocks the laser beam.

6. The electrode tab inspection apparatus according to claim 1,
wherein the laser generation unit is configured to emit the laser beam toward the detection unit when the electrode tab passes the location at which the electrode tab blocks the laser beam.

7. The electrode tab inspection apparatus according to claim 1, further comprising:
a marking unit configured to mark to identify the electrode tab as determined defective.

8. The electrode tab inspection apparatus according to claim 7,
wherein the marking unit is configured to mark a part of the electrode sheet corresponding to the electrode tab determined defective.

9. The electrode tab inspection apparatus according to claim 1,
wherein the laser generation unit is configured such that a projection area of the laser beam onto the electrode tab is 50% to 99% of an area of the electrode tab.

10. An electrode tab inspection method for inspecting an electrode tab notched at a side of an electrode sheet in a width direction, the electrode tab inspection method comprising the steps of:
emitting, by a laser generation unit, a laser beam toward a detection unit when the electrode tab passes a location at which the electrode tab blocks the laser beam incident into the detection unit; and
determining if the electrode tab is defective based on a detection result of the detection unit.

11. The electrode tab inspection method according to claim 10,
wherein the step of determining if the electrode tab is defective comprises determining that the electrode tab is defective in response to the laser beam being detected by the detection unit.

12. The electrode tab inspection method according to claim 10, further comprising the step of:
marking to identify the electrode tab as determined defective.

13. The electrode tab inspection method according to claim 12,
wherein the step of marking comprises marking a part of the electrode sheet corresponding to the electrode tab determined defective.

14. The electrode tab inspection method according to claim 10,
wherein in the step of emitting the laser beam, a projection area of the laser beam onto the electrode tab is 50% to 99% of an area of the electrode tab.
